# EUROPEAN PATENT SPECIFICATION

(11) **EP 1 775 690 B1**
(45) Date of publication and mention of the grant of the patent: **13.01.2010**
(21) Application number: 05077328.2
(22) Date of filing: 12.10.2005
(51) Int. Cl.: G08G 1/0968, G08G 1/14

(54) **Method and system for navigating a vehicle to a parking space**
Verfahren und System für die Navigation eines Fahrzeuges zu einem Parkplatz
Méthode et système de navigation d' un véhicule vers un place de stationnement

(43) Date of publication of application: 18.04.2007
(73) Proprietor: Parkmobile Group B.V., 1096 AT Amsterdam (NL)
(72) Inventor: Veltenaar, Rudolf, 6957 AX Laag Soeren (NL)
(74) Representative: Dohmen, Johannes Maria Gerardus

(56) References cited:
- WO-A-97/19568
- US-A- 5 748 107
- US-B1- 6 266 609

## Description

### Field of the Invention

The present invention relates to a method of navigating a vehicle to a parking space in a destination area surrounding a target destination, wherein parking data is received for said destination area, and wherein a parking area within said destination area is determined from said parking data.

The invention further relates to a parking navigation system for a vehicle for navigating said vehicle to a parking space in the destination area surrounding a target destination, for use in a method as described above, said system comprising receiving means for receiving parking data for said destination area, and control means for determining a parking area within said destination area from said parking data.

The invention also relates to a parking navigation arrangement comprising at least one parking navigation system as described above.

### Background of the Invention

An increasing number of vehicles are nowadays equipped with navigation systems for guiding the vehicle to a destination targeted by the driver of such a vehicle. This provides a certain level of comfort to the driver of the vehicle since he/she is not bothered anymore with consulting road maps or having to stop by the side of the road to consult passing pedestrians. A driver types in his target destination, and the navigation system calculates the quickest or shortest route to the intended target destination, based on a present position of the vehicle. While driving, the driver is provided with guiding instructions, either on screen or by a synthesized voice. Travel time of the driver from its origin to its destination is significantly reduced, and the estimated time of arrival can be calculated by the navigation system and provided as output while driving.

A disadvantage of the present system is that it is unable to support the driver in finding a parking space at the destination. Therefore, upon reaching the target destination, de driver often still has to consult a street map or the like to find a suitable parking space. More sophisticated navigation systems may also provide the driver with the location of parking areas or parking garages near the destination. This is of course an improvement, since the driver may be easily guided to the nearest parking area he/she can park his/her car.

A still remaining disadvantage of these more sophisticated navigation systems, is that upon arrival near the parking area, the driver may learn that all parking spaces within the parking area are occupied. Not only has the driver lost (valuable) time, but he is again bothered with finding another parking area for parking his vehicle.

Another disadvantage is that although large parking areas and parking garages may be indicated by the navigation system, parking spaces alongside the street cannot be found by the navigation system. It may be the case that the driver, while following instructions to the nearest parking area, may drive past one or more unoccupied parking spaces. The driver may decide to park his vehicle in one of these spaces, but while doing so, he may be unaware of local parking regulations, or the location of his target destination relative to where he parked his car.

It will be appreciated that conventional navigation systems, even the more sophisticated types, do not provide a sufficiently satisfiable solution for parking near the target destination. Parking a vehicle, and in particular finding a parking space, is in, practise often governed by a number of requirements and needs which are not addressed by conventional navigation systems.

United States Patent nr. US 6,266,609 discloses a navigation system that enables providing guidance for guiding a vehicle to an available parking space. Probability of available parking spaces is determined for an area by detecting vehicles that are stationary and have their engines turned off. This detection is performed by making use of traffic information provided by specific types of navigation systems that provide such traffic information and that may be installed in other vehicles. The number of vehicles identified as parked is compared with statistics on the number of parking spaces available in the area, and an estimate of the number of empty of parking spaces is made using statistics on the proportion of vehicles equipped with the specific type of navigation system that provides the necessary traffic information. Based on the outcome of the estimate, the navigation system guides the vehicle to an area for parking.

It therefore an object of the present invention to provide a method for navigating a vehicle to a parking space, and a parking navigation system for use with such a method, wherein the problems and disadvantages of the prior art have been alleviated, and according to which a parking space can be found taking into account the actual local situation at the destination area.

This and other objects have been achieved by the present invention in that there is provided a method according to claim 1 as appended.

In accordance with the present invention, a parking area is determined based on at least one parking strategy parameter. Therefore a number of requirements resulting from the local situation in the destination area, and/or concerns of the driver, may be taken along while finding a parking area. In particular, in the method of present invention, a traffic information parameter is determined for the destination area. The traffic information parameter provides an indication of the actual local situation at the destination area, which may be relevant for finding a suitable parking area. Based on the determined traffic information parameter, the at least one parking strategy parameter is determined. In other words, the strategy for finding a parking area is made dependent on the actual present situation at the destination area.

To give an example, when a driver is trying to find a parking space in a city on Sunday morning, while there is not a lot of traffic on the road and many parking spaces (especially in a commercial area) are unoccupied, the method of the invention will guide the driver to any parking space suitable for his needs. The vehicle may for example be guided to an unoccupied parking space which has the shortest distance to the target destination.

Now suppose that the driver is driving to the same destination area, but on Friday afternoon when there is heavy traffic in the destination area. Most parking spaces will be occupied, and whenever a parking space becomes unoccupied, It will not be left unoccupied for a long time. Therefore, if the travel time of the vehicle to an unoccupied parking space is too long, the parking space may be occupied again. Therefore, according to the method of the present invention, the at least one parking strategy parameter used for finding a parking area is made dependent on the outcome of a traffic information parameter. For instance, when there is heavy traffic the vehicle may be guided to the unoccupied parking space in the destination area that can be reached in the shortest possible travel time, given the vehicle's present location.

In accordance with an embodiment of the present invention, the parking area is determined while optimizing the at least one strategy parameter. It will be understood that optimizing the strategy parameter may be dependent on the strategy parameter itself. For instance, if the selected strategy parameter is distance to the target destination, optimizing the strategy parameter effectively means finding the shortest distance between an unoccupied parking space and the target destination. If the at least one parking strategy parameter comprises maximum allowed duration of a parking right within said parking area, a parking area is selected wherein it is allowed to park the vehicle at least for the duration required by the user. If however on the other hand property safety statistics are selected as parking strategy parameter, unoccupied parking spaces may be selected using the method of the present invention by finding a quiet area with low crime rates.

According to another embodiment of the present invention, the at least one parking strategy parameter comprises at least one element of a group comprising estimated travel time of said vehicle to said parking area, distance between said parking area and said target destination, costs of parking said vehicle in said parking area, maximum allowed duration of parking in said parking area, type of parking service offered at said parking area, such as garage parking, street parking or mobile parking service, property safety statistics such as crime rates, and weather forecast.

In particular it is noted that some drivers may have a preference for certain parking services offered. For example, it may be the case that a driver prefers to park his car at a location where he is charged for the parking after returning to his car, e.g. because the required duration of the parking activity is not known. Also, the driver may want to benefit from the advantages of a mobile parking service, wherein his parking rights are registered via a wireless connection to a parking database and charged afterwards, e.g. by debiting his bank account..

Also, the driver may be cautious to park his car in certain areas, since he may be afraid of theft of property from his car. According to the method of the present invention, crime rates or crime statistics for a certain area may therefore form a parking strategy parameter.

Another requirement may be based on the weather forecast. It may be the case that it will be a very warm and sunny day, and the driver wants to park his car preferably in a shaded area, in order to be certain that the temperature within the car will be at an acceptable level when the driver returns to his car. Alternatively, the driver may be afraid of a hail storm damaging the exterior of the car, and may therefore want to find a parking space in a parking garage.

According to another embodiment of the present invention the parking data is received from a parking database. Such a database may, according to yet another embodiment, be a parking management system for at least a part of a residential area, said parking management system storing information regarding the provisioning of parking rights to users. As will be understood, any other parking database, wherein actual parking details are stored may be suitable within the method of the present invention. A parking database operated by a mobile parking operator storing parking information for areas wherein a mobile parking service is offered, may also be used for providing parking data for use in a method according to the present invention.

A parking management system as described above for at least a part of a residential area is described in European patent application number 05076735.9, titled: "Method of and parking management system for managing the issuing of parking rights, and a parking space navigation system for use with said method". An advantage of using such a parking management system as described above, is that it is likely to contain full parking details of all parking rights provided within the destination area, or at least a large part thereof, regardless of the parking service provided and the party offering the parking rights. The parking management system described above may beneficially be used for identifying any unoccupied parking spaces or parking areas wherein unoccupied parking spaces are likely to be found, at any point in time. Such a parking management system may also, at least for some parking services, provide details regarding the expiry of a parking right in the near future. It may therefore be used to identify parking spaces that may become available within the destination area at the time of arrival of a vehicle driving to that area.

It is noted in particular, that parking data such as made available by a parking management system as described above, or by any other parking database, may also be used to determine the traffic information parameter as used in a method according to the present invention. Note that the present overall occupation of parking spaces, e.g. the percentage of parking spaces occupied in a certain area at a certain moment in time, may be used as a traffic information parameter providing an indication of the traffic load for that area.

According to another embodiment of the present invention, the parking data is based on parking details from a plurality of users of parking rights in said destination area. Suppose that each user in the destination area provides parking details such as position of the parked car and optionally duration of the parking rights This information may be gathered and stored in a database, or alternatively be received by a parking navigation system and stored locally in the vehicle. It is noted that for practical reasons the storing of such information in a central parking database is to be preferred.

According to an embodiment thereof, a parking position is determined for a parked vehicle of at least one of said plurality of users using positioning means, and said parking details comprise said parking position of said parked vehicle. Such positioning means may for instance be a satellite based positioning system, such as global positioning system (GPS) or Galileo. In particular it is noted that the use of Galileo enables very accurate determination of the position of a vehicle, with an accuracy of typically 2 m, enabling identification of individual parking places wherein said vehicles are parked. Using a system wherein the position of each parking space alongside a street or within any other parking area is known, the recording of the parking position of each parked vehicle using Galileo, may therefore provide a direct indication on which parking space is occupied and which is unoccupied.

According to another embodiment of the present invention, the parking data comprises at least one element of a group comprising location of parking areas, availability of parking areas, such as occupancy status of parking spaces within said parking area, costs of parking rights in parking areas, maximum duration of parking rights for parking areas, properties safety statistics for parking areas such as crime rate, environmental data such as weather forecast for said destination area. It is noted that some of these details may be centrally recorded and stored in a parking database, while other details such as crime rate and weather forecast may be retrieved in a method of according to the present invention using other means. As an example, a weather forecast for a certain area may not be available from a parking database, but may be received wirelessly from sources such as the internet, or another information source.

According to another embodiment of the present invention the traffic information parameter is selected from a group comprising traffic load in said destination area, occupancy status for a plurality of parking spaces in said destination area, number of parking right issued in said destination area, actual traffic statistics for said destination area, a traffic load estimate based on historical traffic statistics, a traffic load estimate based on time, such as time of the day or day of the week, road blocks, traffic deviations, and events such as markets or parades taking place within said destination area. This information may be based on received parking data, or may be received through other sources such as a traffic message channel (TMC), the internet or another wireless connection with an information source.

According to another embodiment of the present invention, said at least one parking strategy is determined based on whether or not said traffic information parameter exceeds a threshold. It is noted that, for example, as soon as the number of vehicles passing traffic counter means installed in a particular road exceeds a certain threshold (e.g. 40 vehicles per minute), the method according to the present invention will select a parking strategy parameter to be used for heavy traffic conditions (e.g. estimated travel time of the vehicle to the parking area to be selected). Note that an output of these counter means are to be made available to a parking navigation system.

As will be understood, this threshold may either be a factory setting, or may be determined by the driver of the vehicle. It is noted that the driver of the vehicle may also, optionally, determine other parameters, such as dimensions of the destination area surrounding the target destination, personal desired parking strategy parameters, etc.

According to yet another embodiment of the present invention the method further comprises a step of remote registration of a parking right after the vehicle has been parked. Note that according to this embodiment as soon as the driver of the vehicle has found a suitable parking space using the method of the invention, he may extend the method by remotely registering the acquired parking right with e.g. a central parking database, by transmitting the required details to the parking database. This part of the method may be performed using the rules and customs of a conventional mobile parking service, which is not described here in further detail.

As will be understood, the parking area may either correspond to a single unoccupied parking space, or may comprise a plurality of parking spaces, which is likely to contain at least one unoccupied parking space at least at an estimated time of arrival of the vehicle.

According to a second aspect of the present invention, there is provided a parking navigation system for a vehicle for navigating said vehicle to a parking space in a destination area surrounding a target destination, for use in a method according to any of the previous claims, said system comprising receiving means for receiving parking data for said destination area, control means for determining a parking area within said destination area from said parking data based on at least one parking strategy parameter, and means for providing navigation information to a driver of said vehicle for guiding said vehicle to said parking area, said control means being further arranged for determining a traffic information parameter for said destination area, and for determining said at least one parking strategy parameter based on said determined traffic information parameter.

It is noted that the receiving means may be arranged for wireless communication, e.g. with a parking database. In particular, the receiving means may be arranged for communicating using at least one protocol selected from a group comprising global system for mobile communications (GSM), general packet radio service (GPRS), universal mobile telecommunications system (UMTS), code division multiple access (CDMA). The invention is not limited to the use of any of these protocols, it will be understood that any straightforward radiocommunication protocol for communication with a central source over which the required parking data may be transmitted, is suitable for use with the method.

According to another embodiment the means for providing navigation information to the driver comprises positioning means for determining an actual position of the vehicle, in particular these positioning means may be satellite based positioning such as global positioning system (GPS) or Galileo.

According to a further embodiment of the invention, the parking navigation system comprises transmitter means for remotely registering the provisioning of a parking right to the driver of the vehicle. In particular, the transmitter may be further arranged for transmitting a determined actual position for said vehicle, which may be determined by positioning means described herein above.

According to a third aspect of the present invention, there is provided a parking navigation arrangement comprising at least one parking navigation system according to any of the claims 15-27, said at least one parking navigation system being installed in at least one vehicle, further comprising a parking database for remotely providing parking data to said at least one parking navigation system, and a plurality of satellites providing positioning signals to said at least one parking navigation system for determining the actual position of each of said at least one parking navigation system.

The present invention will now be further elucidated by a description and drawings referring to a preferred embodiment thereof. The invention is not limited to the embodiments disclosed, which are provided for explanatory purposes only.

### Brief Description of the Drawings

Figure 1 schematically shows a method according to the present invention.
Figure 2 schematically shows an arrangement, including a parking navigation system according to the present invention.

### Detailed Description of the Drawings

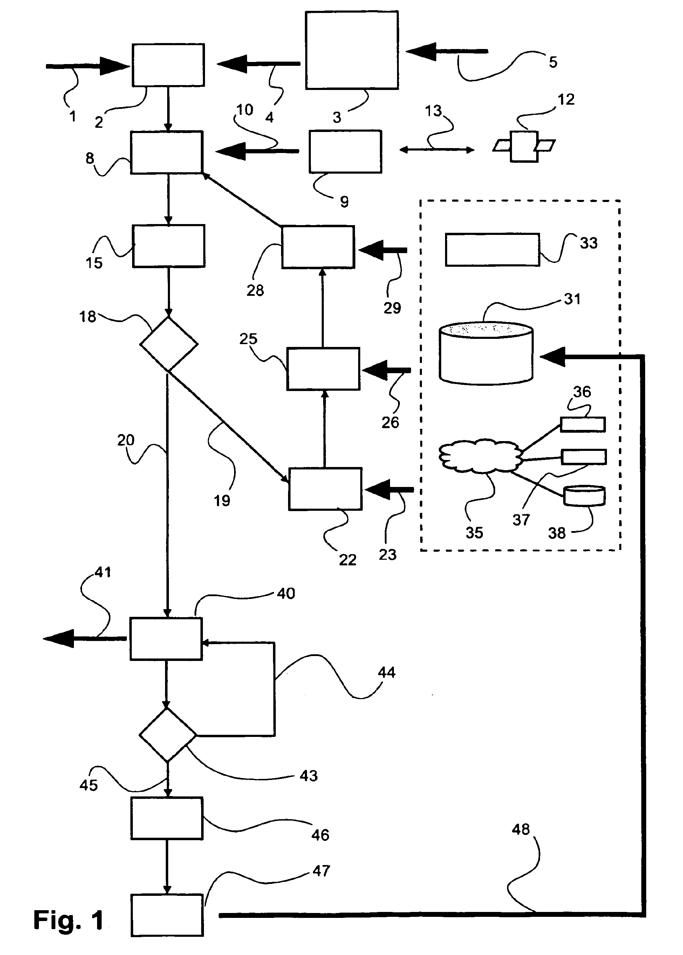

Figure 1 schematically shows the method according to the present invention, for navigating a vehicle to a parking space in a destination area, including possible input and data sources for each of the steps shown in figure 1. The method according to the present invention may start with a target destination 1 being provided by the user. In step 2, a destination area surrounding the target destination is determined, e.g. by control means of a parking navigation system according to the present invention. In order to determine the destination area, specific details 4, such as a radius of the destination area or other requirements, may be retrieved from settings 3 (e.g. stored in a parking navigation system according to the invention). These settings may either be factory settings, or may include preferences 5 provided by a user. Once, in step 2, the destination area is determined, an optimal route or path may be calculated in step 8. In order to be able to calculate the route, an actual position 10 of the vehicle may be provided by positioning means 9. It is noted that positioning means 9 may include any conventional positioning means, which are arranged for determining an actual position of a moving object such as the vehicle, In the present example, the positioning means 9 comprise a global positioning system (GPS) receiving signals 13 from a plurality of satellites (schematically indicated by satellite 12) and calculating the actual position from the received signals 13. In addition, the step 8 of calculating the route also requires the availability of data of available roads, e.g. made available using a digital map. Such a digital map is not shown in figure 1, but is a standard feature of navigation systems, which is either available on a CD-ROM, or may be stored in a memory of the navigation system.

When the route to the destination area (in particular the target destination) has been calculated, the method continues by calculating the estimated time of arrival in step 15. In step 18, it is decided whether a parking space for the vehicle within the destination area has already been established, or is preferably to be established by choice of the user. It is noted that it may not in all cases be desired by the user to find a parking space within the destination area. In some cases a parking space is already available to the user (e.g. a representative of a company visiting a client may be aware that he can park his vehicle on the parking lot of the customer). In case a parking space should be established within the destination area, the method of the present invention follows branch 19 and in step 22 a traffic information parameter is determined based on received Input 23 from a plurality of sources (31, 33, 36, 37, 38). Here it is noted that primarily, parking data received from parking database 31 may be used to determine the traffic information parameter. Alternatively the traffic information parameter may be determined based on information received from a traffic messaging channel (TMC) 33. Also a parking navigation system may wirelessly consult the internet 35 (or another telecommunications network), in order to access a plurality of other data sources 36, 37 or databases 38 (e.g. a weather forecast).

It is noted that the traffic information parameter may for instance include the traffic load within the destination area, which can be determined in a number of different ways. One option to determine the traffic load, is to consult a parking database and to determine the average rate of occupancy of parking spaces within the destination area. Another way of determining the traffic load is to consult traffic information messages from the traffic messaging channel 33, Other traffic information parameters may Include the presence of road blocks or deviations, or special events taking place in a certain area.

After the traffic information parameter has been determined, the method continues in step 25 to determine at least one parking strategy parameter which is to be used for selecting a parking area. The at least one parking strategy parameter is dependent on the determined traffic information parameter. This step may be carried out, for example, by comparing the traffic information parameter determined in step 22 with a threshold value, and to determine the most suitable parking strategy parameter based on whether or not this threshold valve is exceeded by the traffic information parameter. To give an example, a situation of heavy traffic in the destination area may give rise to selecting a parking area that can be reached in the shortest possible time, by optimising the travel time to the parking space. This will ensure that a parking area which is found by the system, is still likely to be available by the time the vehicle reaches its destination. When, alternatively, there is not a lot of traffic within the destination area, the parking navigation system may decide to select a parking area which is closest to the target destination provided by the user. The parking strategy parameter to be optimised in this latter case is the distance between the target destination and the parking area.

In step 28, a parking area is selected while optimising the parking strategy parameter(s) determined in step 25. As an input to step 28, the availability of parking places is received from parking database 31. After a parking area has been established using a method of the present invention, the calculated route to the target destination is evaluated to determine whether or not a modification thereof is required. A new route to the established parking area is calculated in step 8 and a new estimated time of arrival to the parking area is determined. Note that the sequence of steps as described above, and as shown in figure 1, may be different from the embodiment shown in figure 1. In particular it is noted that the step of selecting a parking area and determining the estimated time of arrival (and therefore recalculating the route) may be performed iteratively, in order to optimize for the travel time between the present position of the vehicle and the parking area.

When a parking area has been established, the necessity of finding a parking space is again evaluated in step 18, and since this is no longer necessary (a parking space has been found), the method will continue via branch 20 with navigation step 40. In step 40, navigation instructions for guiding the vehicle to the destination area, in particular to the parking area, are provided to the driver of the vehicle. It is noted that steps 18 and 40 may be exchanged, such that navigation to the destination area takes place before deciding whether or not a parking area or parking space has to be established. Beneficially, an instruction for finding a parking space may be provided at some point during navigation, when the vehicle approaches the destination area, in order to ensure that the travel time to the selected parking space is as short as possible. A decision to establish a parking space, as as taken in step 18, may be taken automatically by a parking navigation system, e.g. when a vehicle is within a certain distance from the destination. Alternatively the decision for finding a parking space may be triggered by a user request before or during navigation.

Decision step 43 decides whether or not the vehicle's destination (this may either be the target destination or the selected parking area) has been reached. If this is not the case (branch 44) the method continues with navigation step 40 providing navigation instructions 41 to the user. If the destination has been reached, branch 45 is followed and the driver will park his vehicle (schematically indicated by step 46). After parking the vehicle, the driver or user may optionally request to register the use of a mobile parking service in step 47. This will trigger parking data 48 to be sent to parking database 31. It is noted that the sending of parking data is not limited to the use of a mobile parking service. The sending of parking data 48 to a central database 31 in step 47 may be a standard procedure for all parking activity taking place, in order to update that database 31 to support the method of the present invention.

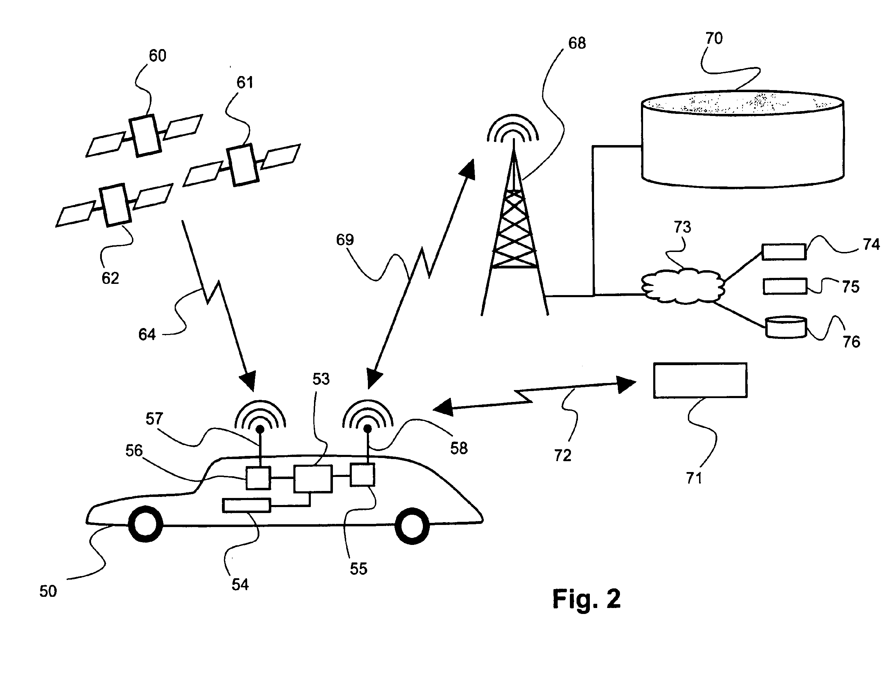

The method of the present invention may be performed using an arrangement and parking navigation system schematically shown in figure 2. In figure 2, a car 50 is equipped with a parking navigation system according to the present invention. The parking navigation system includes control means 53 which are connected to input/output means 54. The input/output means may include a display on the dashboard of the car, and a number of command buttons or a keypad, to enable the user to provide an input signal. In addition, communication means 55 comprising a suitable antenna 58 enables communication using a wireless telecommunication network. Control means 53 are further connected to positioning means 56, which in the present example may be a global positioning system (GPS). GPS 56 comprises a suitable antenna 57 receiving signals from a plurality of GPS satellites 60, 61 and 62. As is known to the person skilled in the art, the accuracy of the determined vehicle position is dependent on the number of satellites having a line of site with the GPS 56. The receiving of GPS signals is schematically indicated by arrow 64. Instead of using GPS, a Galileo based positioning system may be applied.

Via communication means 55, parking data, traffic information and other information is received via a wireless connection 69 with base station 68. Base station 68 may be connected with a telecommunication network (not in particularly shown) with a parking database 70 and the internet 73. Through the internet 73, the communication means may receive any desired information from sources 74, 75 and database 76. It is further noted that using communication means 55, it is also possible to receive traffic information from a traffic messaging channel sent along with a regular signal from a radio station. In figure 2, the traffic messaging channel is schematically indicated by block 71, having a wireless connection 72 with antenna 58. The arrangement shown In figure 2 may be operated using the method described with reference to figure 1.

It will be appreciated that numerous modifications and variations of the present invention are possible in the light of the above teachings. It is therefore understood that within the scope of the appended claims, the invention may be practised otherwise than as specifically described herein.

## Claims

1. Method of navigating a vehicle (50) to a parking space in a destination area surrounding a target destination (1), wherein parking data (23) is received for said destination area, wherein a parking area within said destination area is determined from said parking data (23) using a parking strategy based on at least one parking strategy parameter (26), and wherein navigation information is provided to a driver of said vehicle (50) for guiding said vehicle (50) to said parking area, said method further comprising the step of:
determining (22) a traffic information parameter for said destination area, said traffic information parameter providing an indication of an actual local situation in said destination area;
**characterized in that** said method further comprises a step of based on said determined traffic information parameter selecting (25) said at least one parking strategy parameter (26) of said parking strategy for determining said parking area.

2. Method according to claim 1, wherein using said parking strategy comprises a step of optimising (28) said at least one parking strategy parameter (26) in view of requirements determined by at least one of said actual local situation in said destination area or a driver of said vehicle (50).

3. Method according to claim 1 or 2, wherein said at least one parking strategy parameter (26) comprises at least one element of a group comprising estimated travel time of said vehicle (50) to said parking area, distance between said parking area and said target destination (1), costs of parking said vehicle (50) in said parking area, maximum allowed duration of parking in said parking area, type of parking service offered at said parking area, such as garage parking, street parking, or mobile parking service, and property safety statistics such as crime rates.

4. Method according to any of the previous claims, wherein said parking data (23) is received from a parking database (31, 70).

5. Method according to claim 4, wherein said parking database (31, 70) is a parking management system (31,70) for at least a part of a residential area, said parking management system storing information regarding the provisioning of parking rights to users.

6. Method according to any of the previous claims, wherein said parking data (23) is based on parking details from a plurality of users of parking rights in said destination area.

7. Method according to claim 6, wherein a parking position is determined for a parked vehicle (50) of at least one of said plurality of users using positioning means (56), and wherein said parking details comprise said parking position of said parked vehicle (50).

8. Method according to claim 7, wherein said positioning means (56) comprises a satellite based positioning system, such as global positioning system (GPS) or Galileo.

9. Method according to any of the claims 4-8, wherein said parking data (23) comprises at least one element of a group comprising location of parking areas, availability of parking areas, such as occupancy status of parking spaces within said parking areas, costs of parking rights in parking areas, maximum duration of parking rights for parking areas, property safety statistics for parking areas, such as crime rates, environmental data, such as weather forecast for said destination area.

10. Method according to any of the previous claims, wherein said traffic information parameter is selected from a group comprising traffic load in said destination area, occupancy status for a plurality of parking spaces in said destination area, number of parking rights issued within said destination area, actual traffic statistics for said destination area, a traffic load estimate based on historical traffic statistics, a traffic load estimate based on time, such as time of the day or day of the week, road blocks, traffic deviations, events such as markets or parades taking place within said destination area.

11. Method according to any of the previous claims, wherein said at least one parking strategy is determined based on whether or not said traffic information parameter exceeds a threshold.

12. Method according to claim 11, wherein said threshold is determined by said driver.

13. Method according to any of the previous claims, further comprising a step of remote registration of a parking right after said vehicle (50) has been parked.

14. Method according to any of the previous claims, wherein said parking area is selected from a group comprising a single unoccupied parking space, or an area likely to contain at least one unoccupied parking space at least at an estimated time of arrival of said vehicle (50).

15. Parking navigation systems for a vehicle (50) for navigating said vehicle (50) to a parking space in a destination area surrounding a target destination (1), for use in a method according to any of the previous claims, said system comprising receiving means (55) for receiving parking data (23) for said destination area, control means for determining a parking area within said destination area from said parking data (23) using a parking strategy based on at least one parking strategy parameter (26), and means for providing navigation information to a driver of said vehicle (50) for guiding said vehicle (50) to said parking area, said control means being further arranged for determining a traffic information parameter for said destination area, said traffic information parameter providing an indication of an actual local situation in said destination area, and for selecting said at least one parking strategy parameter (26) of said parking strategy based on said determined traffic information parameter.

16. Parking navigation system according to claim 15, wherein said control means are arranged for performing said parking strategy by optimising said at least one parking strategy parameter (26) in view of requirements determined by at least one of said actual local situation in said destination area or a driver of said vehicle (50).

17. Parking navigation system according to claim 15 or 16, wherein said at least one parking strategy parameter (26) comprises at least one element of a group comprising estimated travel time of said vehicle (50) to said parking area, distance between said parking area and said target destination (1), costs of parking said vehicle (50) in said parking area, maximum allowed duration of parking in said parking area, type of parking service offered at said parking area, such as garage parking, street parking, or.mobile parking service, and property safety statistics such as crime rates.

18. Parking navigation system according to any of the claims 15-17, wherein said receiving means (55) are arranged for receiving said parking data (23) from a parking database (31, 70).

19. Parking navigation system according to any of the claims 15-18, wherein said receiving means (55) are arranged for wireless communication.

20. Parking navigation system according to claim 19, wherein said receiving means (55) are arranged for communicating using at least one protocol selected from a group comprising Global System for Mobile Communications (GSM), General Packet Radio Service (GPRS), Universal Mobile Telecommunications System (UMTS), Code Division Multiple Access (CDMA).

21. Parking navigation system according to any of the claims 15-20, wherein said means for providing navigation information to said driver comprises positioning means (56) for determining an actual position of said vehicle (50).

22. Parking navigation system according to claim 21, wherein said positioning means (56) are satellite based positioning means (56), such as global positioning system (GPS) or Galileo.

23. Parking navigation system according to any of the claims 15-22, wherein said control means are arranged for determining said traffic information parameter from said parking data (23).

24. Parking navigation system according to claim 23 wherein said traffic information parameter is selected from a group comprising traffic load for said destination area, occupancy status for a plurality of parking spaces in said destination area, number of parking rights issued within said destination area, actual traffic statistics for said destination area, a traffic load estimate based on historical traffic statistics, a traffic load estimate based on time, such as time of the day or day of the week, road blocks, traffic deviations, events such as markets or parades taking place within said destination area.

25. Parking navigation system according to any of the claims 15-24, wherein said control means is arranged for selecting said at least one parking strategy parameter (26) based on said traffic information parameter exceeding a threshold.

26. Parking navigation system according to any of the claims 15-25, further comprising transmitter means for remotely registering the provisioning of a parking right to said driver for said vehicle (50).

27. Parking navigation system according to claim 26, wherein said transmitter means are further arranged for transmitting a determined actual position of said vehicle (50).

28. Parking navigation arrangement comprising at least one parking navigation system according to any of the claims 15-27, said at least one parking navigation system being installed in at least one vehicle (50), further comprising a parking database (31, 70) for remotely providing parking data (23) to said at least one parking navigation system, and a plurality of satellites providing positioning signals to said at least one parking navigation system for determining the actual position of each of said at least one parking navigation system.

## Patentansprüche

1. Verfahren zum Navigieren eines Fahrzeugs (50) zu einem Parkplatz in einem Zielgebiet, das ein geplantes Ziel (1) umgibt, bei dem Parkdaten (23) für das Zielgebiet empfangen werden, aus den Parkdaten (23) unter Anwendung einer auf wenigstens einen Parkstrategieparameter (26) gestützten Parkstrategie eine Parkfläche innerhalb des Zielgebiets bestimmt wird und einem Fahrer des Fahrzeugs (50) Navigationsinformationen geliefert werden, um das Fahrzeug (50) zu der Parkfläche zu führen, wobei das Verfahren ferner den Schritt umfasst, bei dem
ein Verkehrsinformationsparameter für das Zielgebiet bestimmt (22) wird, wobei der Verkehrsinformationsparameter eine Angabe über eine örtliche Ist-Situation in dem Zielgebiet liefert,
**dadurch gekennzeichnet, dass** das Verfahren ferner einen Schritt umfasst, bei dem der wenigstens eine Parkstrategieparameter (26) der Parkstrategie zur Bestimmung der Parkfläche auf der Grundlage des bestimmten Verkehrsinformationsparameters ausgewählt (25) wird.

2. Verfahren nach Anspruch 1, bei dem die Anwendung der Parkstrategie einen Schritt umfasst, bei dem der wenigstens eine Parkstrategieparameter (26) im Hinblick auf Erfordernisse, die von der örtlichen Ist-Situation im Zielgebiet und/oder einem Fahrer des Fahrzeugs (50) bestimmt werden, optimiert (28) wird.

3. Verfahren nach Anspruch 1 oder 2, bei dem der wenigstens eine Parkstrategieparameter (26) wenigstens ein Element einer Gruppe umfasst, die die geschätzte Fahrzeit des Fahrzeugs (50) zu der Parkfläche, die Entfernung zwischen der Parkfläche und dem geplanten Ziel (1), die Kosten für das Parken des Fahrzeugs (50) auf der Parkfläche, die zulässige Höchstparkdauer auf der Parkfläche, die Art des an der Parkfläche angebotenen Parkdienstes, wie etwa Parken in einem Parkhaus, Parken an der Straße oder mobiler Parkdienst, sowie Eigentumssicherheitsstatistiken wie etwa Kriminalitätsraten umfasst.

4. Verfahren nach einem der vorhergehenden Ansprüche, bei dem die Parkdaten (23) von einer Parkdatenbank (31, 70) empfangen werden.

5. Verfahren nach Anspruch 4, bei dem die Parkdatenbank (31, 70) ein Parkleitsystem (31, 70) für zumindest einen Teil eines Wohngebiets ist, wobei in dem Parkleitsystem Informationen bezüglich der Bereitstellung von Parkrechten an Benutzer gespeichert werden.

6. Verfahren nach einem der vorhergehenden Ansprüche, bei dem die Parkdaten (23) auf Parkeinzelheiten von mehreren Benutzern von Parkrechten in dem Zielgebiet beruhen.

7. Verfahren nach Anspruch 6, bei dem für ein geparktes Fahrzeug (50) wenigstens eines der mehreren Benutzer unter Verwendung eines Positionsbestimmungsmittels (56) eine Parkposition festgestellt wird und bei dem die Parkeinzelheiten die Parkposition des geparkten Fahrzeugs (50) umfassen.

8. Verfahren nach Anspruch 7, bei dem das Positionsbestimmungsmittel (56) ein satellitengestütztes Positionsbestimmungssystem wie etwa das Globale Positionsbestimmungssystem (GPS) oder Galileo umfasst.

9. Verfahren nach einem der Ansprüche 4 bis 8, bei dem die Parkdaten (23) wenigstens ein Element einer Gruppe umfassen, die die Lage von Parkflächen, die Verfügbarkeit von Parkflächen wie etwa den Belegungsstatus von Parkplätzen innerhalb der Parkflächen, die Kosten für Parkrechte auf Parkflächen, die Höchstdauer von Parkrechten für Parkflächen, Eigentumssicherheitsstatistiken für Parkflächen wie etwa Kriminalitätsraten, Umweltdaten wie etwa Wettervorhersage für das Zielgebiet umfasst.

10. Verfahren nach einem der vorhergehenden Ansprüche, bei dem der Verkehrsinformationsparameter aus einer Gruppe ausgewählt wird, die die Verkehrslast in dem Zielgebiet, den Belegungsstatus für mehrere Parkplätze in dem Zielgebiet, die Anzahl der in dem Zielgebiet ausgegebenen Parkrechte, die Ist-Verkehrsstatistik für das Zielgebiet, eine auf historischen Verkehrsstatistiken beruhende Verkehrslastschätzung, eine auf der Zeit wie etwa der Tageszeit oder dem Wochentag beruhende Verkehrslastschätzung, Straßensperren, Verkehrsumleitungen, Veranstaltungen wie etwa innerhalb des Zielgebiets stattfindende Märkte oder Paraden umfasst.

11. Verfahren nach einem der vorhergehenden Ansprüche, bei dem die wenigstens eine Parkstrategie anhand dessen bestimmt wird, ob der Verkehrsinformationsparameter einen Schwellenwert überschreitet oder nicht.

12. Verfahren nach Anspruch 11, bei dem der Schwellenwert vom Fahrer bestimmt wird.

13. Verfahren nach einem der vorhergehenden Ansprüche, das ferner einen Schritt umfasst, bei dem eine Fernregistrierung eines Parkrechts erfolgt, nachdem das Fahrzeug (50) geparkt wurde.

14. Verfahren nach einem der vorhergehenden Ansprüche, bei dem die Parkfläche aus einer Gruppe ausgewählt wird, die einen einzelnen nichtbelegten Parkplatz oder eine Fläche umfasst, die zumindest zu einer geschätzten Ankunftszeit des Fahrzeugs (50) voraussichtlich wenigstens einen nichtbelegten Parkplatz enthält.

15. Parknavigationssystem für ein Fahrzeug (50) zum Navigieren des Fahrzeugs (50) zu einem Parkplatz in einem Zielgebiet, das ein geplantes Ziel (1) umgibt, zur Verwendung bei einem Verfahren nach einem der vorhergehenden Ansprüche, wobei das System Empfangsmittel (55) zum Empfang von Parkdaten (23) für das Zielgebiet, Steuermittel zur Bestimmung einer Parkfläche innerhalb des Zielgebiets aus den Parkdaten (23) unter Anwendung einer auf wenigstens einen Parkstrategieparameter (26) gestützten Parkstrategie sowie Mittel zur Lieferung von Navigationsinformationen an einen Fahrer des Fahrzeugs (50) umfasst, um das Fahrzeug (50) zu der Parkfläche zu führen, wobei das Steuermittel ferner so eingerichtet ist, dass es einen Verkehrsinformationsparameter für das Zielgebiet bestimmt, wobei der Verkehrsinformationsparameter eine Angabe über eine örtliche Ist-Situation in dem Zielgebiet liefert, und dass es anhand des bestimmten Verkehrsinformationsparameters den wenigstens einen Parkstrategieparameter (26) der Parkstrategie auswählt.

16. Parknavigationssystem nach Anspruch 15, bei dem die Steuermittel so eingerichtet sind, dass sie die Parkstrategie durchführen, indem der wenigstens eine Parkstrategieparameter (26) im Hinblick auf Erfordernisse, die von der örtlichen Ist-Situation im Zielgebiet und/oder einem Fahrer des Fahrzeugs (50) bestimmt werden, optimiert wird.

17. Parknavigationssystem nach Anspruch 15 oder 16, bei dem der wenigstens eine Parkstrategieparameter (26) wenigstens ein Element einer Gruppe umfasst, die die geschätzte Fahrzeit des Fahrzeugs (50) zu der Parkfläche, die Entfernung zwischen der Parkfläche und dem geplanten Ziel (1), die Kosten für das Parken des Fahrzeugs (50) auf der Parkfläche, die zulässige Höchstparkdauer auf der Parkfläche, die Art des an der Parkfläche angebotenen Parkdienstes, wie etwa Parken in einem Parkhaus, Parken an der Straße oder mobiler Parkdienst, sowie Eigentumssicherheitsstatistiken wie etwa Kriminalitätsraten umfasst.

18. Parknavigationssystem nach einem der Ansprüche 15 bis 17, bei dem die Empfangsmittel (55) so eingerichtet sind, dass sie die Parkdaten (23) von einer Parkdatenbank (31, 70) empfangen.

19. Parknavigationssystem nach einem der Ansprüche 15 bis 18, bei dem die Empfangsmittel (55) für drahtlose Kommunikation eingerichtet sind.

20. Parknavigationssystem nach Anspruch 19, bei dem die Empfangsmittel (55) zur Kommunikation unter Verwendung wenigstens eines Protokolls eingerichtet sind, das aus einer Gruppe ausgewählt ist, die das Globale System für Mobile Kommunikation (GSM), den Allgemeinen Paketorientierten Funkdienst (GPRS), das Universelle Mobile Telekommunikationssystem (UMTS) und den Codemultiplex-Vielfachzugriff (CDMA) umfasst.

21. Parknavigationssystem nach einem der Ansprüche 15 bis 20, bei dem das Mittel zur Lieferung von Navigationsinformationen an den Fahrer Positionsbestimmungsmittel (56) zur Bestimmung einer Ist-Position des Fahrzeugs (50) umfasst.

22. Parknavigationssystem nach Anspruch 21, bei dem die Positionsbestimmungsmittel (56) satellitengestützte Positionsbestimmungsmittel (56) wie etwa das Globale Positionsbestimmungssystem (GPS) oder Galileo sind.

23. Parknavigationssystem nach einem der Ansprüche 15 bis 22, bei dem die Steuermittel so eingerichtet sind, dass sie den Verkehrsinformationsparameter aus den Parkdaten (23) bestimmen.

24. Parknavigationssystem nach Anspruch 23, bei dem der Verkehrsinformationsparameter aus einer Gruppe ausgewählt ist, die die Verkehrslast für das Zielgebiet, den Belegungsstatus für mehrere Parkplätze in dem Zielgebiet, die Anzahl der in dem Zielgebiet ausgegebenen Parkrechte, die Ist-Verkehrsstatistik für das Zielgebiet, eine auf historischen Verkehrsstatistiken beruhende Verkehrslastschätzung, eine auf der Zeit wie etwa der Tageszeit oder dem Wochentag beruhende Verkehrslastschätzung, Straßensperren, Verkehrsumleitungen, Veranstaltungen wie etwa innerhalb des Zielgebiets stattfindende Märkte oder Paraden umfasst.

25. Parknavigationssystem nach einem der Ansprüche 15 bis 24, bei dem das Steuermittel so eingerichtet ist, dass es den wenigstens einen Parkstrategieparameter (26) aufgrund dessen auswählt, dass der Verkehrsinformationsparameter einen Schwellenwert überschreitet.

26. Parknavigationssystem nach einem der Ansprüche 15 bis 25, ferner mit Sendemitteln zur Fernregistrierung der Beschaffung eines Parkrechts für den Fahrer des Fahrzeugs (50).

27. Parknavigationssystem nach Anspruch 26, bei dem die Sendemittel ferner so eingerichtet sind, dass sie eine festgestellte Ist-Position des Fahrzeugs (50) übertragen.

28. Parknavigationsanordnung mit wenigstens einem Parknavigationssystem nach einem der Ansprüche 15 bis 27, wobei das wenigstens eine Parknavigationssystem in wenigstens ein Fahrzeug (50) eingebaut ist, ferner mit einer Parkdatenbank (31, 70), mit der Parkdaten (23) aus der Ferne an das wenigstens eine Parknavigationssystem geliefert werden, und mehreren Satelliten, die zur Bestimmung der Ist-Position des jeweils wenigstens einen Parknavigationssystems Positionsbestimmungssignale an das wenigstens eine Parknavigationssystem liefern.

## Revendications

1. Procédé de guidage d'un véhicule (50) vers un emplacement de stationnement dans une zone de destination entourant une destination cible (1), dans lequel des données de stationnement (23) sont reçues pour ladite zone de destination, dans lequel une zone de stationnement dans ladite zone de destination est déterminée à partir desdites données de stationnement (23) en utilisant une stratégie de stationnement basée sur au moins un paramètre de stratégie de stationnement (26), et dans lequel des informations de navigation sont fournies à un conducteur dudit véhicule (50) pour guider ledit véhicule (50) vers ladite zone de stationnement, ledit procédé comprenant en outre l'étape consistant à :
déterminer (22) un paramètre d'informations de trafic pour ladite zone de destination, ledit paramètre d'informations de trafic fournissant une indication d'une situation locale réelle dans ladite zone de destination ;
**caractérisé en ce que** ledit procédé comprend en outre une étape de sélection (25), sur la base dudit paramètre d'informations de trafic déterminé, dudit au moins un paramètre de stratégie de stationnement (26) de ladite stratégie de stationnement pour déterminer ladite zone de stationnement.

2. Procédé selon la revendication 1, dans lequel l'utilisation de ladite stratégie de stationnement comprend une étape d'optimisation (28) dudit au moins un paramètre de stratégie de stationnement (26) en tenant compte de spécifications déterminées par au moins l'un de ladite situation locale réelle dans ladite zone de destination ou d'un conducteur dudit véhicule (50).

3. Procédé selon la revendication 1 ou 2, dans lequel ledit au moins un paramètre de stratégie de stationnement (26) comprend au moins un élément d'un groupe comprenant le temps de déplacement estimé dudit véhicule (50) vers ladite zone de stationnement, la distance entre ladite zone de stationnement et ladite destination cible (1), les coûts de stationnement dudit véhicule (50) dans ladite zone de stationnement, la durée maximum autorisée de stationnement dans ladite zone de stationnement, le type de service de stationnement proposé dans ladite zone de stationnement, tel qu'un service de stationnement en garage, de stationnement dans la rue, ou de stationnement mobile, et les statistiques de sécurité des biens telles que les taux de criminalité.

4. Procédé selon l'une quelconque des revendications précédentes, dans lequel lesdites données de stationnement (23) sont reçues d'une base de données de stationnements (31, 70).

5. Procédé selon la revendication 4, dans lequel ladite base de données de stationnements (31, 70) est un système de gestion de stationnements (31, 70) pour au moins une partie d'une zone résidentielle, ledit système de gestion de stationnement mémorisant des informations concernant la fourniture de droits de stationnement aux utilisateurs.

6. Procédé selon l'une quelconque des revendications précédentes, dans lequel lesdites données de stationnement (23) sont basées sur des détails de stationnement provenant d'une pluralité d'utilisateurs de droits de stationnement dans ladite zone de destination.

7. Procédé selon la revendication 6, dans lequel une position de stationnement est déterminée pour un véhicule (50) stationné d'au moins l'un de ladite pluralité d'utilisateurs en utilisant des moyens de positionnement (56), et dans lequel lesdits détails de stationnement comprennent ladite position de stationnement dudit véhicule (50) stationné.

8. Procédé selon la revendication 7, dans lequel lesdits moyens de positionnement (56) comprennent un système de positionnement par satellites, tel qu'un système de positionnement mondial (GPS) ou Galileo.

9. Procédé selon l'une quelconque des revendications 4 à 8, dans lequel lesdites données de stationnement (23) comprennent au moins un élément d'un groupe comprenant l'emplacement de zones de stationnement, la disponibilité de zones de stationnement, telle que l'état d'occupation des emplacements de stationnement dans lesdites zones de stationnement, les coûts des droits de stationnement dans les zones de stationnement, la durée maximum des droits de stationnement pour les zones de stationnement, les statistiques de sécurité des biens pour les zones de stationnement, telles que les taux de criminalité, les données environnementales, telles que les prévisions météorologiques pour ladite zone de destination.

10. Procédé selon l'une quelconque des revendications précédentes, dans lequel ledit paramètre d'informations de trafic est sélectionné dans un groupe comprenant la charge de trafic dans ladite zone de destination, l'état d'occupation d'une pluralité d'emplacements de stationnement dans ladite zone de destination, le nombre de droits de stationnement émis dans ladite zone de destination, les statistiques de trafic réelles pour ladite zone de destination, une estimation de charge de trafic basée sur les statistiques d'historique de trafic, une estimation de charge de trafic basée sur l'heure, telle que l'heure du jour ou le jour de la semaine, les barrages routiers, les déviations de trafic, les événements tels que les marchés ou les parades ayant lieu dans ladite zone de destination.

11. Procédé selon l'une quelconque des revendications précédentes, dans lequel ladite au moins une stratégie de stationnement est déterminée selon que ledit paramètre d'informations de trafic dépasse ou non un seuil.

12. Procédé selon la revendication 11, dans lequel ledit seuil est déterminé par ledit conducteur.

13. Procédé selon l'une quelconque des revendications précédentes, comprenant en outre une étape d'enregistrement à distance d'un droit de stationnement après que ledit véhicule (50) a été stationné.

14. Procédé selon l'une quelconque des revendications précédentes, dans lequel ladite zone de stationnement est sélectionnée dans un groupe comprenant un emplacement de stationnement inoccupé unique, ou une zone susceptible de contenir au moins un emplacement de stationnement inoccupé au moins à un instant estimé d'arrivée dudit véhicule (50).

15. Système de navigation de stationnement pour un véhicule (50) pour guider ledit véhicule (50) vers un emplacement de stationnement dans une zone de destination entourant une destination cible (1), pour une utilisation dans un procédé selon l'une quelconque des revendications précédentes, ledit système comprenant des moyens de réception (55) pour recevoir des données de stationnement (23) pour ladite zone de destination, des moyens de commande pour déterminer une zone de stationnement dans ladite zone de destination à partir desdites données de stationnement (23) en utilisant une stratégie de stationnement basée sur au moins un paramètre de stratégie de stationnement (26), et des moyens pour fournir des informations de navigation à un conducteur dudit véhicule (50) pour guider ledit véhicule (50) vers ladite zone de stationnement, lesdits moyens de commande étant en outre agencés pour déterminer un paramètre d'informations de trafic pour ladite zone de destination, ledit paramètre d'informations de trafic fournissant une indication d'une situation locale réelle dans ladite zone de destination, et pour sélectionner ledit au moins un paramètre de stratégie de stationnement (26) de ladite stratégie de stationnement sur la base dudit paramètre d'informations de trafic déterminé.

16. Système de navigation de stationnement selon la revendication 15, dans lequel lesdits moyens de commande sont agencés pour mettre en oeuvre ladite stratégie de stationnement en optimisant ledit au moins un paramètre de stratégie de stationnement (26) en tenant compte de spécifications déterminées par au moins l'un de ladite situation locale réelle dans ladite zone de destination ou d'un conducteur dudit véhicule (50).

17. Système de navigation de stationnement selon la revendication 15 ou 16, dans lequel ledit au moins un paramètre de stratégie de stationnement (26) comprend au moins un élément d'un groupe comprenant le temps de déplacement estimé dudit véhicule (50) vers ladite zone de stationnement, la distance entre ladite zone de stationnement et ladite destination cible (1), les coûts de stationnement dudit véhicule (50) dans ladite zone de stationnement, la durée maximum autorisée de stationnement dans ladite zone de stationnement, le type de service de stationnement proposé dans ladite zone de stationnement, tel qu'un service de stationnement en garage, de stationnement dans la rue, ou de stationnement mobile, et les statistiques de sécurité des biens telles que les taux de criminalité.

18. Système de navigation de stationnement selon l'une quelconque des revendications 15 à 17, dans lequel lesdits moyens de réception (55) sont agencés pour recevoir lesdites données de stationnement (23) d'une base de données de stationnements (31, 70).

19. Système de navigation de stationnement selon l'une quelconque des revendications 15 à 18, dans lequel lesdits moyens de réception (55) sont agencés pour une communication sans fil.

20. Système de navigation de stationnement selon la revendication 19, dans lequel lesdits moyens de réception (55) sont agencés pour communiquer en utilisant au moins un protocole sélectionné dans un groupe comprenant le système mondial de communication mobile (GSM), le service radio en mode paquet général (GPRS), le système de télécommunication mobile universel (UMTS), l'accès multiple à répartition par code (CDMA).

21. Système de navigation de stationnement selon l'une quelconque des revendications 15 à 20, dans lequel lesdits moyens pour fournir des informations de navigation audit conducteur comprennent des moyens de positionnement (56) pour déterminer une position réelle dudit véhicule (50).

22. Système de navigation de stationnement selon la revendication 21, dans lequel lesdits moyens de positionnement (56) sont des moyens de positionnement par satellite (56), tels que le système de positionnement mondial (GPS) ou Galileo.

23. Système de navigation de stationnement selon l'une quelconque des revendications 15 à 22, dans lequel lesdits moyens de commande sont agencés pour déterminer ledit paramètre d'informations de trafic à partir desdites données de stationnement (23).

24. Système de navigation de stationnement selon la revendication 23, dans lequel ledit paramètre d'informations de trafic est sélectionné dans un groupe comprenant la charge de trafic pour ladite zone de destination, l'état d'occupation d'une pluralité d'emplacements de stationnement dans ladite zone de destination, le nombre de droits de stationnement émis dans ladite zone de destination, les statistiques de trafic réelles pour ladite zone de destination, une estimation de charge de trafic basée sur les statistiques d'historique de trafic, une estimation de charge de trafic basée sur l'heure, telle que l'heure du jour ou le jour de la semaine, les barrages routiers, les déviations de trafic, les événements tels que les marchés ou les parades ayant lieu dans ladite zone de destination.

25. Système de navigation de stationnement selon l'une quelconque des revendications 15 à 24, dans lequel lesdits moyens de commande sont agencés pour sélectionner ledit au moins un paramètre de stratégie de stationnement (26) sur la base dudit paramètre d'informations de trafic dépassant un seuil.

26. Système de navigation de stationnement selon l'une quelconque des revendications 15 à 25, comprenant en outre des moyens formant émetteur pour enregistrer à distance la fourniture d'un droit de stationnement audit conducteur pour ledit véhicule (50).

27. Système de navigation de stationnement selon la revendication 26, dans lequel lesdits moyens formant émetteur sont en outre agencés pour transmettre une position réelle déterminée dudit véhicule (50).

28. Agencement de navigation de stationnement comprenant au moins un système de navigation de stationnement selon l'une quelconque des revendications 15 à 27, ledit au moins un système de navigation de stationnement étant installé dans au moins un véhicule (50), comprenant en outre une base de données de stationnements (31, 70) pour fournir à distance des données de stationnement (23) audit au moins un système de navigation de stationnement, et une pluralité de satellites fournissant des signaux de positionnement audit au moins un système de navigation de stationnement pour déterminer la position réelle de chacun desdits au moins un système de navigation de stationnement.
